# EUROPEAN PATENT SPECIFICATION

(11) **EP 0 449 822 B1**
(45) Date of publication and mention of the grant of the patent: **21.09.1994**
(21) Application number: 89905438.1
(22) Date of filing: 09.05.1989
(51) Int. Cl.: H02H 3/16, H02H 7/00, H02H 7/22

(54) **ELECTRONIC CONTROL AND PROTECTION DEVICE**
ELEKTRONISCHE STEUERUNG UND SCHUTZVORRICHTUNG
DISPOSITIF DE COMMANDE ET DE PROTECTION ELECTRONIQUE

(30) Priority: 09.05.1988 GB 8810938
(43) Date of publication of application: 09.10.1991
(73) Proprietor: RAYCHEM GMBH, 85521 Ottobrunn (DE)
(72) Inventor: STANZEL, Erwin, D-6464 Linsengericht (DE); CLAASSEN, Claus, D-6242 Kronbergtaunus (DE)
(74) Representative: Jones, David Colin
(86) International application number: GB8900503
(87) International publication number: WO8911174

(56) References cited:
- DE-A- 2 425 081
- FR-A- 1 575 827
- FR-A- 2 182 040
- GB-A- 2 096 221
- US-A- 3 803 455
- US-A- 4 359 626
- DESIGN ENGINEERING, February 1987, LONDON GB, pp. 56-57; "Polymeric PCT heaters are formed to suit the application".

## Description

This invention relates to a facade of a building having a thermally conductive framework having a heating element connected to electrical power via an electronic control and protection device.

Heated window and door surrounds are described in GB-A-2 096 221.

Earth leakage current breakers (ELCBs) are known for plugging in between a source of electrical power and electric equipment to ensure the safety of an operator of the equipment under faulty or other conditions that could otherwise give rise to flow of a dangerously high earth current, of greater than about 10mA, through the operator. Traditionally, ELCBs are heavy, rugged pieces of equipment containing a lot of metal that can generally withstand high ambient temperatures under normal load conditions. GB Patent No. 1 208 208 discloses an earth-leakage transformer having a positive temperature coefficient resistor that responds to the heat generated in the coils of the transformer under conditions of sustained overload to operate a trip coil. Known electronic ELCBs however are limited to operating under normal conditions in maximum ambient temperatures of about 45 °C when power is being supplied through them to the associated equipment. US-A-3 803 455 describes an ELCB having a thermal override to open the circuit breaker. However, applications exist in which the temperature can reach 60°C to 70°C under normal load conditions either due to the electrical poser supplied or due to heating from another source e.g. the sun. For example a self-regulating electric heater, that is to say one having a positive temperature coefficient of resistance, mounted inside the metal facade surrounding a window can reach 60°C in the winter. In these circumstances, it may not be convenient to locate the electronic ELCB physically near the heater since it would have to be switched off. On the other hand, the traditional ELCBs are electromechanical devices and consequently too bulky for applications such as facade heating.

Elongate heating elements, including those of the self-regulating type, are not always installed by electrically skilled personnel, so that extra safety must be ensured in the products as sold by the manufacturer.

One object of the present invention is to provide a facade in which the electronic control and protection device is protected even during normal, i.e. non-overload, operating conditions, against excessive ambient temperatures.

According to the present invention, there is provided a facade of a building, the facade comprising:
a thermally conductive framework having a channel therein, and
an elongate electrical heater which can be connected to electrical power and which is mounted on the facade to apply heat thereto;
characterised by:
an electronic protection device that is electrically connected between the heater and the power source and which, when the heater is connected to the power source, disconnects the heater from the power source when there is a leakage current from the heater to ground which increases to above a predetermined value;
switching means located between the protection device and the power source;
an enclosure within which the protection device is mounted, said enclosure being disposed within the channel of said framework; and
a temperature-sensing device which is mounted externally of the enclosure for sensing the ambient temperature of the facade framework, and which, when the heater is connected to the power source, disconnects the protection device and the heater from the power source when the ambient temperature of the facade increases to above a predetermined value within the range of 20° to 45°C.

The power interruption means, and electronic ELCB employing semiconductor chips, needs to be protected against an ambient temperature is excess of about 45°C when under load. By appropriate selection of components, in particular the semiconductor chips, the critical ambient temperature may in fact be greater than 45°C. Accordingly, the temperature sensing device, for example a thermostat, is arranged to switch the ELCB off when such predetermined temperature is exceeded. Switching off the ELCB also switches off the heater and the electronic ELCB will no longer be under load conditions and is thus able to withstand exposure to a much higher ambient temperature, say up to 80°C or even 100°C.

The predetermined activating temperature may be variably selected either manually at the device itself or remotely. Remote control may be connected via a computer, so that, for example, the amount of heating provided at different parts of a building can be variably controlled as required.

Advantageously the electrical heater is an elongate heating cable exhibiting a positive temperature coefficient (PTC) of resistivity, and is thus self-regulating. Such a heater is available from Raychem under the trade names CHEMELEX, AUTOTRACE and WINTERGARD.

The electrical power and cable are connected to the ELCB within the enclosure for reasons of safety, and also to protect the ELCB device and its connections. The materials used for the enclosure are preferably substantially unaffected by any adverse environment to which they may be exposed, such as moisture condensation, salts and other ionic contaminants such as are found in industrial and coastal locations for example.

Further installation and operational safety and convenience are provided by arranging for any cable, power or heater, extending from the control and protection device to have its free end terminated. That is to say, the free end of the cable will be completely sealed off, such as the termination of a PTC heater cable, or have a connector or plug fitted thereto.

In one application of the present invention, a pre-terminated power supply cable is connected to the control and protection device within a compact enclosure of cross-section 15 x 15mm and length 120mm. a WINTERGARD PTC heater cable from Raychem is also connected to the ELCB device within the enclosure and extends therefrom through aluminium extruded profiles of a facade heating construction. Alternatively, the heater cable may be located remote from the enclosure and connected to the device therein by means of a further power cable lead.

Some embodiments of electronic control and protection devices, each used in a facade in accordance with the present invention, will now be described, by way of example, with reference to the accompanying drawings, in which:-
- Figure 1: shows schematically a basic version of the device and indicates some preferred optional features; and
- Figure 2: shows schematically a more complex version of the device.

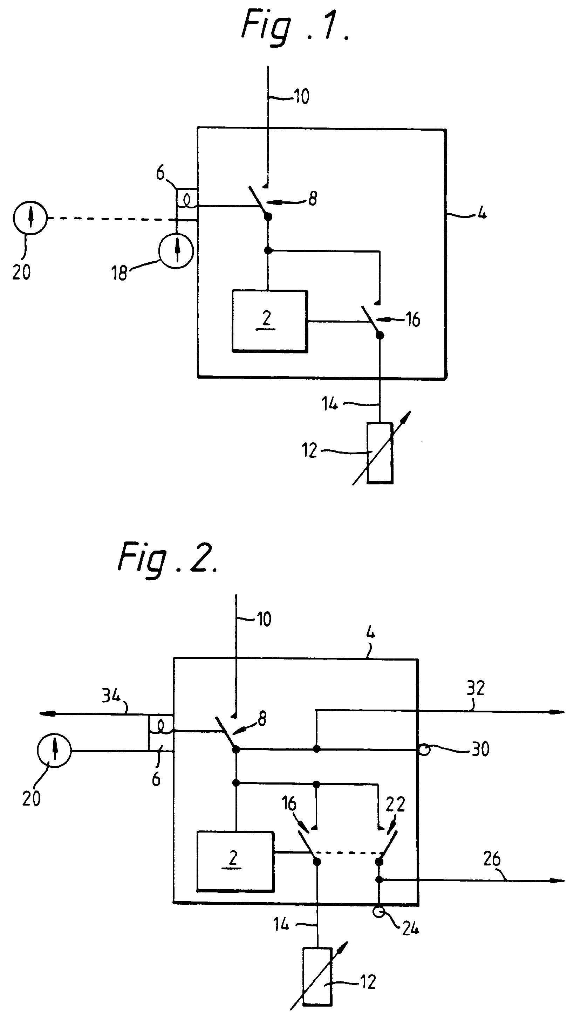

Referring to Figure 1, an electronic earth leakage current breaker (ELCB) 2 that is capable of withstanding a maximum temperature of 45°C under load conditions, is mounted inside an enclosure 4. A temperature sensor 6 is mounted on the outside of the enclosure 5 and is electrically connected to the ELCB 2 via a switch 8. A power cable 10 enters the enclosure 4 and is connected to the switch 8. A self-regulating heater cable 12 has its power supply cable 14 extending into the enclosure 4 and connected to the ELCB 2 and to the switch 8 by a further switch 16.

In the event of an electrical fault that gives rise to a current flow through the ELCB 2 in excess of its trip value or 10mA, the ELCB operates to open the switch 16 thus cutting off the power supply to the heater 12.

In the event of the temperature sensor 6 detecting an ambient temperature in excess of its trip value of 45°C, it is arranged to operate the switch 8 thus cutting off the power supply to the heater 12 and also to the ELCB 2 so that the latter component is not under load above its maximum operating temperature.

As an optional feature, the temperature sensor 6 may have a control arrangement 18 associated therewith in order that its critical ambient or trip temperature may be set at a predetermined value anywhere within the range 20°C to 45°C. The control arrangement 18 may be mounted alongside the sensor 6 on the enclosure 4 and operated manually, or it may be located remote therefrom as shown at 20, with a cable connection thereto, and operated manually or preferably by a computer.

The electronic control and protection device of Figure 2 includes all the components of Figure 1, which for convenience have been given the same reference numerals, and some additional components.

Referring to Figure 2, a switch 22 is connected in parallel with the switch 16 so as to be operated simultaneously therewith by the ELCB 2. An indicator lamp 24 in series with the switch 22 is mounted on the outside of the enclosure 4, and a cable 26 extends from the lamp 24 to remote equipment which may be an indicating and/or control equipment. When the ELCB 2 opens the switch 16, as described with reference to Figure 1, the switch 22 is also opened and the normally on lamp 24 is extinguished, and this is detected and indicated in an appropriate manner by remote alarm indicating equipment. The existence of an electrical fault is thus indicated locally on the enclosure 4 of the device itself and also remotely.

A further indicator lamp 30 is mounted on the outside of the enclosure 4 and electrically connected to the switch 8 in order to indicate locally whether or not electrical power is supplied to the ELCB 2 and heater 12. A cable 32 also conveys this information to remote indicating equipment.

A cable 34 extends also from the temperature sensor 6 to remote equipment for indicating the actual ambient temperature, and/or the fact that the critical temperature has been reached or exceeded.

The various pieces of remote equipment referred to above may be separate, or may be combined together, giving information on the status of the various components of the protection and control device, indicating a fault or alarm condition, or exercising a control function as appropriate.

It is to be understood that a protection and control device may include selected ones only of the components and features described herein.

A device described above with reference to Figure 1 or Figure 2 is used in facade heating of a building. Thus, the electronic control and protection device is made small enough to be located within the framework, which is of good thermally conductive material such as metal, surrounding a window or a door of a building that is subject to large heat loss, for example through glass panels. The heating, to counteract the cold effect felt by a person in the vicinity of a large glass panel of a heated building, may conveniently be achieved by one or more self-regulating heaters, for example polymeric PTC (positive temperature coefficient) heaters as sold by Raychem under the tradenames CHEMELEX and AUTOTRACE, also mounted within the framework. In such an arrangement, when the ambient temperature of the facade exceeds a predetermined value the temperature sensor will arrange for current through the ELCB 2 to be interrupted and so maintain the integrity cf the electronic ELCB.

## Claims

1. A facade of a building, the facade comprising:
a thermally conductive framework having a channel therein, and
an elongate electrical heater (12) which can be connected to electrical power and which is mounted on the facade to apply heat thereto;
characterised by:
an electronic protection device (2) that is electrically connected between the heater (12) and the power source (10) and which, when the heater (12) is connected to the power source, disconnects the heater (12) from the power source (10) when there is a leakage current from the heater to ground which increases to above a predetermined value;
switching means (8) located between the protection device (2) and the power source;
an enclosure (4) within which the protection device (2) is mounted, said enclosure (4) being disposed within the channel of said framework; and
a temperature-sensing device (6) which is mounted externally of the enclosure (4) for sensing the ambient temperature of the facade framework, and which, when the heater (12) is connected to the power source (10), disconnects the protection device (2) and the heater (12) from the power source when the ambient temperature of the facade increases to above a predetermined value within the range of 20° to 45°C.

2. A facade according to claim 1, wherein said predetermined ambient temperature value can be changed.

3. A facade according to claim 1 or claim 2, including indicating equipment (24) which is located remote from the protection device (4) and which indicates when the protection device (4) has been disconnected from the power source (10).

4. A facade according to any one of claims 1 to 3, including indicating equipment which indicates when said predetermined value of ambient temperature has been exceeded.

5. A facade as claimed in any one of claims 1 to 4 wherein the elongate heater is a self-regulating heater cable.

6. A facade as claimed in claim 5 wherein the heater cable is a polymeric heater cable capable of exhibiting a positive temperature coefficient of resistance.

## Patentansprüche

1. Fassade eines Gebäudes, wobei die Fassade aufweist:
ein wärmeleitfähiges Fachwerk mit einem Kanal darin und
eine langgestreckte elektrische Heizeinrichtung (12), die an elektrischen Strom angeschlossen werden kann und an der Fassade angebracht ist, um Wärme darauf aufzubringen;
gekennzeichnet durch:
eine elektronische Schutzeinrichtung (2), die elektrisch zwischen die Heizeinrichtung (12) und die Stromquelle (10) eingeschaltet ist und die, wenn die Heizeinrichtung (12) mit der Stromquelle verbunden ist, die Heizeinrichtung (12) von der Stromquelle (10) trennt, wenn ein Leckstrom von der Heizeinrichtung zu Masse auftritt, der über einen vorbestimmten Wert ansteigt;
eine Schalteinrichtung (8), die zwischen der Schutzeinrichtung (2) und der Stromquelle angeordnet ist;
eine Gehäuse (4), in dem die Schutzeinrichtung (2) angebracht ist, wobei das Gehäuse (4) in dem Kanal des Fachwerks angeordnet ist; und
eine Temperatursensoreinrichtung (6), die außerhalb des Gehäuses (4) angebracht ist, um die Umgebungstemperatur des Fassadenfachwerks zu erfassen, und die, wenn die Heizeinrichtung (12) mit der Stromquelle (10) verbunden ist, die Schutzeinrichtung (2) und die Heizeinrichtung (12) von der Stromquelle trennt, wenn die Umgebungstemperatur der Fassade über einen vorbestimmten Wert in dem Bereich von 20° bis 45 °C ansteigt.

2. Fassade nach Anspruch 1, wobei der vorbestimmte Umgebungstemperaturwert geändert werden kann.

3. Fassade nach Anspruch 1 oder Anspruch 2, die eine Anzeigeeinrichtung (24) aufweist, die von der Schutzeinrichtung (4) entfernt angeordnet ist und anzeigt, daß die Schutzeinrichtung (4) von der Stromquelle (10) getrennt worden ist.

4. Fassade nach einem der Ansprüche 1 bis 3, die eine Anzeigeeinrichtung aufweist, die anzeigt, daß der vorbestimmte Umgebungstemperaturwert überschritten worden ist.

5. Fassade nach einem der Ansprüche 1 bis 4, wobei die langgestreckte Heizeinrichtung ein selbstregelndes Heizkabel ist.

6. Fassade nach Anspruch 5, wobei das Heizkabel ein polymeres Heizkabel ist, das fähig ist, einen positiven Temperaturkoeffizienten des Widerstand aufzuweisen.

## Revendications

1. Façade de bâtiment, la façade comportant :
une ossature conductrice de la chaleur présentant une rainure, et
un élément chauffant électrique allongé (12) qui peut être connecté à de l'énergie électrique et qui est monté sur la façade pour lui appliquer de la chaleur ;
caractérisée par :
un dispositif électronique (2) de protection qui est connecté électriquement entre l'élément chauffant (12) et la source d'énergie (10) et qui, lorsque l'élément chauffant (12) est connecté à la source d'énergie, déconnecte l'élément chauffant (12) de la source d'énergie (10) lorsqu'un courant de fuite circulant de l'élément chauffant à la masse s'élève au-dessus d'une valeur prédéterminée ;
un moyen de commutation (8) placé entre le dispositif de protection (2) et la source d'énergie ;
et une enceinte (4) à l'intérieur de laquelle le dispositif de protection (2) est monté, ladite enceinte (4) étant disposée dans la rainure de ladite ossature ; et
un dispositif (6) captant la température qui est monté à l'extérieur de l'enceinte (4) pour capter la température ambiante de l'ossature de la façade et qui, lorsque l'élément chauffant (12) est connecté à la source d'énergie (10), déconnecte le dispositif de protection (2) et l'élément chauffant (12) de la source d'énergie lorsque la température ambiante de la façade s'élève au-dessus d'une valeur prédéterminée comprise dans la plage de 20 à 45°C.

2. Façade selon la revendication 1, dans laquelle ladite valeur prédéterminée de la température ambiante peut être modifiée.

3. Façade selon la revendication 1 ou la revendication 2, comprenant un appareil (24) d'indication qui est placé à distance du dispositif (4) de protection et qui indique lorsque le dispositif (4) de protection a été déconnecté de la source d'énergie (10).

4. Façade selon l'une quelconque des revendications 1 à 3, comprenant un appareil d'indication qui indique lorsque ladite valeur prédéterminée de la température ambiante a été dépassée.

5. Façade selon l'une quelconque des revendications 1 à 4, dans laquelle l'élément chauffant est un câble chauffant à auto-régulation.

6. Façade selon la revendication 5, dans laquelle le câble chauffant est un câble chauffant polymérique dont la résistance peut présenter un coefficient positif de température.
